# EUROPÄISCHE PATENTANMELDUNG

(11) **EP 3 954 890 A1**
(43) Veröffentlichungstag der Anmeldung: **16.02.2022**
(21) Anmeldenummer: 21178755.1
(22) Anmeldetag: 10.06.2021
(51) Int. Cl.: F02N 15/06, F02N 11/10, F02N 15/00, F16B 37/12, F16J 15/08

(54) **STARTER FÜR EINE BRENNKRAFTMASCHINE UND VERFAHREN ZU DESSEN HERSTELLUNG**

(30) Priorität: 11.08.2020 DE 102020121081
(71) Anmelder: SEG Automotive Germany GmbH, 70499 Stuttgart (DE)
(72) Erfinder: JENSEN, Benjamin, 71723 Grossbottwar (DE)
(74) Vertreter: DehnsGermany Partnerschaft von Patentanwälten

(57) **Zusammenfassung**

Die Erfindung betrifft einen Starter für eine Brennkraftmaschine, mit einem Starterrelais, bei dem ein Relaisgehäuse (112) des Starterrelais in einem Kontaktbereich an einer vom Relaisgehäuse verschiedenen Komponente (122) des Starters anliegt und mit der Komponente (122) mittels einer oder mehrerer Schrauben (140) verschraubt ist, wobei für die eine oder die mehreren Schrauben (140) vorgesehene Ausnehmungen in dem Relaisgehäuse (112) und in der Komponente (122) jeweils von dem Kontaktbereich umgeben sind, und wobei in dem Relaisgehäuse (112) oder in der Komponente (122) im Kontaktbereich eine oder mehrere, die eine oder die mehreren Ausnehmungen umgebende, Erhebungen (150) ausgebildet sind, die durch die Verschraubung mittels der einen oder der mehreren Schrauben (140) in das Relaisgehäuse (112) bzw. in die Komponente (122) eingepresst sind, sowie ein Verfahren zu dessen Herstellung.

## Beschreibung

Die vorliegende Erfindung betrifft einen Starter für eine Brennkraftmaschine mit einem Starterrelais sowie ein Verfahren zum Herstellen eines solchen Starters.

### Stand der Technik

Starter werden zum Anlassen bzw. Starten von Brennkraftmaschinen verwendet und weisen typischerweise einen Motor bzw. Elektromotor auf, der - meist über verschiedene Komponenten wie Planetengetriebe und Überholkupplung bzw. Freilauf - eine Ritzelwelle und damit ein darauf angebrachtes Ritzel antreibt, das mit einem Zahnkranz der Brennkraftmaschine in Eingriff gebracht wird, um diese zu starten.

Um das Ritzel mit dem Zahnkranz in Eingriff zu bringen, wird dieses typischerweise zunächst eingespurt, also insbesondere axial bewegt. Hierzu wird in aller Regel ein Starterrelais (auch als Einrückrelais bezeichnet) verwendet, das z.B. als Magnetschalter ausgebildet ist. Über einen Hebelmechanismus kann dann eine solche axiale Bewegung des Starterrelais in eine axiale Bewegung des Ritzels übersetzt werden.

Das Starterrelais ist in aller Regel Teil des Starters bzw. kann als Teil des Starters angesehen werden, weist jedoch ein separates Gehäuse (also ein Relaisgehäuse) auf, das entsprechend z.B. an einem Motorgehäuse oder einem Gehäuseflansch oder auch einer anderen Komponente des Starters befestigt wird. Hierzu können eine oder mehrere Schrauben verwendet werden.

### Offenbarung der Erfindung

Erfindungsgemäß werden ein Starter für eine Brennkraftmaschine und ein Verfahren zum Herstellen eines solchen Starters mit den Merkmalen der unabhängigen Ansprüche vorgeschlagen. Vorteilhafte Ausgestaltungen sind Gegenstand der Unteransprüche sowie der nachfolgenden Beschreibung.

Die vorliegende Erfindung betrifft einen Starter für eine Brennkraftmaschine, wie eingangs bereits geschildert, d.h. der Starter weist ein Starterrelais wie z.B. einen Magnetschalter auf, sowie ein Verfahren zu dessen Herstellung. Hierbei liegt ein Relaisgehäuse des Starterrelais in einem Kontaktbereich an einer vom Relaisgehäuse verschiedenen Komponente des Starters, z.B. einem Motorgehäuse oder einem Gehäuseflansch, an und ist mit dieser Komponente mittels einer oder mehrerer Schrauben verschraubt. Es versteht sich, dass einerseits ein Hebelmechanismus zum Übertragen einer Bewegung des Starterrelais und andererseits verschiedene Komponenten von Elektromotor über (Planeten-)Getriebe und Freilauf bis Ritzel vorhanden sein können, auf die es in der vorliegenden Erfindung jedoch nicht konkret ankommt.

Für die eine oder die mehreren Schrauben sind bzw. werden Ausnehmungen bzw. Bohrungen in dem Relaisgehäuse und in der Komponente vorgesehen. Zweckmäßig sind als Schrauben z.B. Senkkopfschrauben, für die in der Komponente Durchgangslöcher bzw. Bohrungen als Ausnehmungen vorgesehen sind, für den Senkkopf dann entsprechend z.B. auch konische Aufweitungen. In dem Relaisgehäuse hingegen sind Gewindebohrungen als Ausnehmungen zweckmäßig, sodass die Schrauben einfach nur durch die Ausnehmungen in der Komponente durchgeführt und in die Ausnehmungen im Relaisgehäuse eingebacht und eingeschraubt werden müssen.

Die Ausnehmungen sind hierbei jeweils von dem Kontaktbereich umgeben, d.h. die Ausnehmungen und der Kontaktbereich - also die Bereiche von Relaisgehäuse und Komponente, die aneinander anliegen - werden dabei derart ausgebildet, dass die Schrauben - im verschraubten Zustand - von dem Kontaktbereich umgeben sind, damit die Spannkraft durch die Schrauben entsprechend übertragen werden kann. Der Begriff Kontaktbereich ist hier insbesondere generisch zu verstehen, d.h. es können auch mehrere (getrennte) Kontaktbereiche vorhanden sein, z.B. im Bereich jeder Ausnehmung ein Kontaktbereich, allerdings ist es zweckmäßig, wenn sich ein Kontaktbereich z.B. in etwa ringförmig um einen Umfang einer Stirnseite des Relaisgehäuses, das typischerweise in etwa Zylinderförmig ausgebildet ist, erstreckt, um eine gleichmäßige Verteilung der Spannkraft durch die Schrauben zu erreichen.

Ein Problem bei solchen Verschraubungen ist, dass diese undicht sein können, d.h. es kann Wasser in das Relaisgehäuse eindringen. Dies betrifft, wie sich gezeigt hat, vor allem die Ausnehmungen bzw. Gewindebohrungen im Relaisgehäuse. Während die Spannkraft der Schrauben sich auf Seiten des Schraubenkopfes auf eine relativ geringe Fläche verteilt, bewirkt deren Verteilung in dem im Vergleich hierzu deutlich größeren Kontaktbereich eine geringere Anpresskraft. Wasser kann dann z.B. - in Bezug auf eine Rotationsachse der Schrauben - in radialer Richtung im Kontaktbereich zwischen Relaisgehäuse und Komponente eindringen, und dann weiter in axialer Richtung in die Ausnehmung im Relaisgehäuse, also z.B. in den Gewindegang.

Eine Möglichkeit, dies zu vermeiden, ist z.B. das Vorsehen von Dichtungsmaterial, z.B. Silikon, um das Gewinde der Schrauben herum, das zusammen mit den Schrauben dann in die Ausnehmung bzw. Gewindebohrung eingebracht und verschraubt wird. Dies bewirkt allerdings eine Verringerung der Spannkraft. Eine andere Möglichkeit hierzu ist z.B. das Vorsehen eines Dichtrings, z.B. aus Gummi, im Kontaktbereich, d.h. zwischen Relaisgehäuse und Komponente. Dies verursacht, ebenso wie die Möglichkeit des Dichtungsmaterials um das Gewinde, zusätzliche Kosten und erhöhten Fertigungsaufwand durch zusätzliche Arbeitsschritte beim Zusammensetzen des Starters.

Im Rahmen der Erfindung wird nun vorgeschlagen, in dem Relaisgehäuse oder in der Komponente (also insbesondere in einem von den beiden Bauteilen) eine oder mehrere Erhebungen (oder Erhöhungen) auszubilden, die die eine bzw. mehreren Ausnehmungen umgeben und durch die Verschraubung mittels der einen oder der mehreren Schrauben in das Relaisgehäuse bzw. in die Komponente eingepresst werden bzw. eingepresst sind. Diese Erhebungen sind insbesondere jeweils relativ zu einer ebenen Oberfläche (z.B. einer Stirnseite des Relaisgehäuses) erhoben und können z.B. durch Stanzen und/oder Prägen erzeugt werden, sind also Insbesondere integral mit dem Relaisgehäuse oder in der Komponente ausgebildet. Sie umgeben die Ausnehmungen in Art eines Stegs.

Bevorzugt sind mehrere Ausnehmungen vorgesehen, die jeweils von einer Erhebung umgeben sind, d.h. insbesondere im Falle mehrerer Schrauben - und entsprechender Anzahl an Ausnehmungen - ist jede der Schrauben bzw. Ausnehmung von einer solchen Erhebung umgeben, und zwar z.B. in einem Abstand, in radialer Richtung in Bezug auf eine Rotationsachse der einen oder mehreren Schrauben gesehen, von höchstens einem Durchmesser, bevorzugt höchstens einem halben Durchmesser, der Ausnehmung (insbesondere diejenige in dem Bauteil, an dem die Erhebung vorgesehen ist). Diese Erhebungen können eine Dicke (bzw. Breite) in radialer Richtung in Bezug auf eine Rotationsachse der einen oder mehreren Schrauben von höchstens einem halben Durchmesser, bevorzugt höchstens einem viertel Durchmesser, der Ausnehmungen aufweisen, und bevorzugt ringförmig ausgebildet sein. Eine Höhe der Erhebungen (über der ebenen Oberfläche) kann klein gehalten werden, z.B. einen halben Millimeter. Grundsätzlich denkbar ist aber auch, dass bei mehreren Schrauben bzw. entsprechenden Ausnehmungen hierfür nur eine Erhebung vorgesehen ist, die dann diese alle umgibt und z.B. ringförmig um den Umfang der Stirnfläche des Relaisgehäuses herum verläuft.

Indem die Erhebungen in die Komponente bzw. das Relaisgehäuse, also an dem Gegenstück zu dem Bauteil, an dem sie ausgebildet sind, eingepresst (oder eingedrückt oder eingeschnitten) werden, wird dieses Gegenstück in entsprechenden Bereichen durch die Erhebungen verformt, womit eine Abdichtung erzielt wird, und zwar insbesondere um die Schrauben herum. Damit ist kein zusätzliches Material zum Abdichten nötig und zusätzliche Arbeitsschritte beim Zusammensetzen können eingespart werden, zumal die Erhebungen besonders zeit- und kostensparend bereits bei der Herstellung des betreffenden Bauteils, d.h. des Relaisgehäuses bzw. der Komponente, ausgebildet werden können.

Um eine möglichst gute Verformung und damit Abdichtung zu erreichen, ist es zweckmäßig wenn ein Material desjenigen Bauteils, in dem die Erhebungen ausgebildet sind, eine höhere Härte aufweist als ein Material desjenigen Bauteils, in das die Erhebungen eingedrückt werden. Ein solches Material sollte hierbei zumindest in dem Kontaktbereich vorgesehen sein, zweckmäßig kann aber auch sein, wenn ein großflächigerer Bereich dieses jeweilige Material aufweist.

Bei einem Starter bietet es sich an, dass das Relaisgehäuse das Material mit der höheren Härte aufweist, zumal ein Relaisgehäuse eines Starters typischerweise aus Stahl besteht oder zumindest Stahl aufweist, um einen magnetischen Fluss geeignet lenken zu können (wie erwähnt, handelt es sich bei einem Starterrelais typischerweise um einen Magnetschalter). Das Motorgehäuse bzw. ein Gehäuseflansch als die Komponente besteht bei einem Starter meist aus Aluminium oder Aluminiumdruckguss.

Auf diese Weise wird also eine besonders kosten- und zeitsparende Möglichkeit bereitgestellt, die Verschraubungen eines Starterrelais im Starter abzudichten und somit ein unerwünschtes Eindringen von Wasser zu vermeiden.

Weitere Vorteile und Ausführungsformen der Erfindung ergeben sich aus der Beschreibung und den dazugehörigen Zeichnungen.

Es ist zu beachten, dass die zuvor genannten und die im Folgenden näher zu beschreibenden Merkmale nicht nur in der jeweils angegebenen Kombination, sondern auch in weiteren Kombinationen oder allein genommen verwendbar sind, ohne den Rahmen der vorliegenden Erfindung zu verlassen.

Die Erfindung wird nun mit Bezug auf die beiliegenden Zeichnungen beschrieben, die eine bevorzugte Ausführungsform zeigen.

### Kurze Beschreibung der Zeichnungen

- Figur 1: zeigt schematisch einen erfindungsgemäßen Starter in einer bevorzugten Ausführungsform in einer Schnittansicht.
- Figuren 2 und 3: zeigen schematisch eine Verschraubung des Starters aus Figur 1 in verschiedenen Stellungen während des Verschraubens, jeweils in einer detaillierteren Ansicht.

### Detaillierte Beschreibung der Zeichnungen

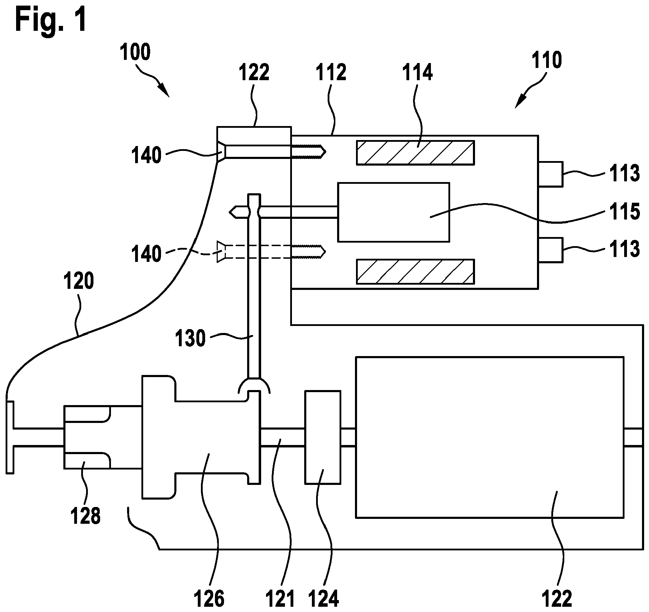

In Figur 1 ist erfindungsgemäßer Starter 100 für eine Brennkraftmaschine in einer bevorzugten Ausführungsform in einer schematischen Schnittansicht dargestellt. Der Starter 100 weist ein Starterrelais 110 auf, das wiederum ein Relaisgehäuse 112 aufweist, in bzw. an dem ein Elektromagnet 114, ein beweglicher Anker 115 sowie zwei Anschlussbolzen 113 vorgesehen sind.

Weiterhin weist der Starter 100 einen Elektromotor 122, ein Getriebe 124, einen Freilauf 126 sowie ein Ritzel 128 auf, die auf einer Welle 121 angeordnet sind. Ritzel 128 und hier beispielsweise auch Freilauf 126 sind mittels eines Hebelmechanismus mit Hebel 130, der an den Anker 115 des Starterrelais 110 angebunden ist, bewegbar. Diese Komponenten sind in einem Gehäuse 120 angeordnet, das auch einen Gehäuseflansch 122 umfasst, an dem das Relaisgehäuse 112 mittels mehrerer Schrauben 140, z.B. zwei Schrauben, angebracht bzw. verschraubt ist.

Hierzu sei angemerkt, dass der konkrete, gezeigte Aufbau des Starters 100 mit den einzelnen Komponenten, auch des Starterrelais 110, rein beispielhaft ist und zur kurzen Erläuterung eines Starters und seiner Funktionsweise dient. Im Rahmen der Erfindung ist insbesondere die Verschraubung des Relaisgehäuses 112 an dem Gehäuseflansch 122 - wobei es sich hier auch um eine andere Komponente des Starters 100 handeln könnte - relevant, die nachfolgend detaillierter erläutert werden soll.

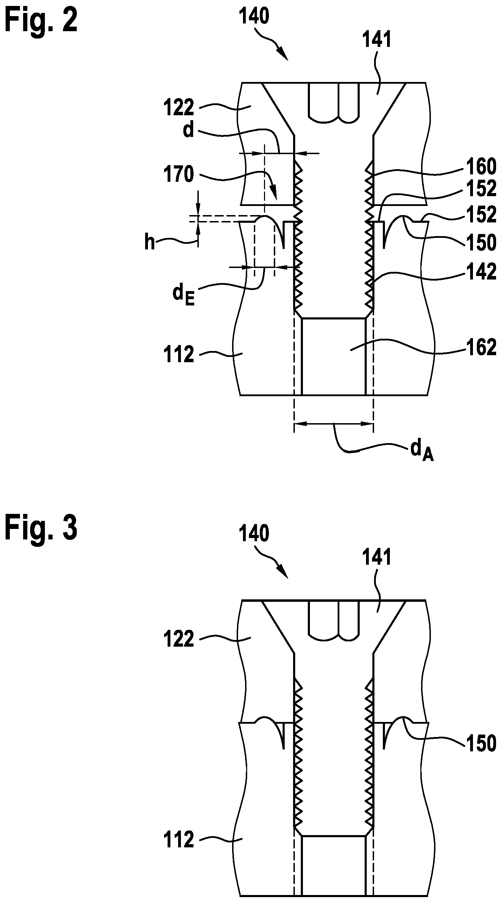

In Figur 2 ist schematisch eine Verschraubung des Starters aus Figur 1 am Beispiel einer Schraube 140 in einer detaillierteren Ansicht gezeigt, und zwar in einer Stellung vor vollständiger Verschraubung. Hierzu sind ein Teil des Gehäuseflansches 122 sowie ein Teil des Relaisgehäuses 112 gezeigt, in denen jeweils eine Ausnehmung 160 bzw. 162 vorgesehen sind.

Die Ausnehmung 162 in dem Relaisgehäuse 112 ist z.B. als Gewindebohrung ausgebildet, sodass ein Gewinde 142 der Schraube 140 darin eingreifen kann. Die Ausnehmung 160 in dem Gehäuseflansch 122 ist z.B. als Durchgangsloch oder Durchgangsbohrung (ohne Gewinde) ausgebildet, durch die die Schraube 140 geführt werden kann. Zudem ist ein (hier nicht näher bezeichneter) konischer Bereich für den konisch geformten Senkkopf 141 der Schraube 140 vorhanden.

In der gezeigten Stellung sind Relaisgehäuse 112 und Gehäuseflansch 122 etwas voneinander beabstandet, wobei sich Oberflächen gegenüberliegen, die später, nach vollständiger Verschraubung (wie später in Figur 3 gezeigt), aneinander anliegen bzw. miteinander in Kontakt stehen. Dieser Kontaktbereich ist mit dem Bezugszeichen 170 bezeichnet.

In dem Relaisgehäuse 112 ist im Kontaktbereich 170 nun eine ringförmig, in einem Abstand d, um die Ausnehmung 162, die einen Durchmesser d_{A} aufweist, herum verlaufende Erhebung 150 mit einer Höhe h und einer Dicke (oder Breite) d_{E} ausgebildet, die sich über einen ebenen oder flachen Bereich 152 erhebt. Diese Erhebung 150 kann z.B. durch ein geeignetes Stanzwerkzeug in das Relaisgehäuse 112 eingebracht werden.

Durch weiteres Eindrehen der Schraube 140 in die Gewindebohrung 162 werden das Relaisgehäuse 112 und der Gehäuseflansch 122 aneinandergedrückt bzw. aneinandergepresst, wie dies in Figur 3 gezeigt ist. Hierbei wird auch die Erhebung 150 in den Gehäuseflansch 122 bzw. dessen Oberfläche eingedrückt bzw. eingepresst, je nach Form der Erhebung ggf. auch eingeschnitten. Insbesondere bei (stark) unterschiedlicher Härte der beteiligten Materialen - das Relaisgehäuse 112 ist typischerweise aus Stahl, der Gehäuseflansch 122 ist typischerweise aus Aluminium - verformt sich das weniger feste Material durch den Druck, den die Erhebung ausübt, und bildet eine Abdichtung aus. Auf diese Weise kann kein Wasser mehr bis an das Gewinde oder gar in das Gewinde oder den Gewindegang mehr eindringen.

## Patentansprüche

1. Starter (100) für eine Brennkraftmaschine, mit einem Starterrelais (110), bei dem ein Relaisgehäuse (112) des Starterrelais in einem Kontaktbereich (170) an einer vom Relaisgehäuse verschiedenen Komponente (122) des Starters anliegt und mit der Komponente (122) mittels einer oder mehrerer Schrauben (140) verschraubt ist,
wobei für die eine oder die mehreren Schrauben (140) vorgesehene Ausnehmungen (160, 162) in dem Relaisgehäuse (112) und in der Komponente (122) jeweils von dem Kontaktbereich (170) umgeben sind, und
wobei in dem Relaisgehäuse (112) oder in der Komponente (122) im Kontaktbereich (170) eine oder mehrere, die eine oder die mehreren Ausnehmungen (160, 162) umgebende, Erhebungen (150) ausgebildet sind, die durch die Verschraubung mittels der einen oder der mehreren Schrauben (140) in das Relaisgehäuse (112) bzw. in die Komponente (122) eingepresst sind.

2. Starter (100) nach Anspruch 1, wobei die Erhebungen (150) um eine jeweilige Ausnehmung in einem Abstand (d) von höchstens einem Durchmesser (d_{A}), bevorzugt höchstens einem halben Durchmesser, der Ausnehmung (162) angeordnet sind.

3. Starter (100) nach Anspruch 1 oder 2, wobei die Erhebungen (150) eine Dicke (d_{E}), in radialer Richtung in Bezug auf eine Rotationsachse der einen oder mehreren Schrauben (140) gesehen, von höchstens einem halben Durchmesser, bevorzugt höchstens einem viertel Durchmesser, der Ausnehmungen aufweisen, und bevorzugt ringförmig ausgebildet sind.

4. Starter (100) nach einem der vorstehenden Ansprüche, wobei die Erhebungen (150) sich jeweils relativ zu einer zumindest im Wesentlichen ebenen Oberfläche (152) erheben.

5. Starter (100) nach einem der vorstehenden Ansprüche, wobei die Ausnehmungen (162) in dem Relaisgehäuse (162) als Gewindebohrungen ausgebildet sind und/oder wobei die Ausnehmungen (160) in der Komponente (122) als Durchgangsbohrungen ausgebildet sind.

6. Starter (100) nach einem der vorstehenden Ansprüche, wobei das Relaisgehäuse (112) und die Komponente (122) zumindest im Kontaktbereich (170) voneinander verschiedene Materialien aufweisen, wobei das Material auf Seiten der Erhebungen (150) eine höhere Härte aufweist.

7. Starter (100) nach Anspruch 6, wobei das Relaisgehäuse (112) zumindest im Kontaktbereich (170) Stahl aufweist, und wobei die Komponente (122) zumindest im Kontaktbereich (170) Aluminium aufweist.

8. Starter (100) nach einem der vorstehenden Ansprüche, wobei die Komponente (122) des Starters als Motorgehäuse oder als Gehäuseflansch ausgebildet ist.

9. Verfahren zum Herstellen eines Starters (100) für eine Brennkraftmaschine, insbesondere nach einem der vorstehenden Ansprüche, mit einem Starterrelais (110), bei dem ein Relaisgehäuse (112) des Starterrelais in einem Kontaktbereich (170) an eine vom Relaisgehäuse verschiedene Komponente (122) des Starters anzulegen und mit der Komponente mittels einer oder mehrerer Schrauben (140) zu verschrauben ist,
wobei für die eine oder die mehreren Schrauben (140) in dem Relaisgehäuse (112) und in der Komponente (122) vorgesehen werden, die jeweils von dem Kontaktbereich (170) umgeben sind,
wobei in dem Relaisgehäuse (112) oder in der Komponente (122) eine oder mehrere Erhebungen (150) ausgebildet werden, die in dem Kontaktbereich (170) liegen und die eine oder die mehreren Ausnehmungen (160, 162) umgeben, und
wobei das Relaisgehäuse (112) an die Komponente (122) angelegt und mittels der einen oder der mehreren Schrauben (140) damit verschraubt wird, sodass die eine oder die mehreren Erhebungen (150) in das Relaisgehäuse (112) bzw. in die Komponente (122) eingepresst werden.

10. Verfahren nach Anspruch 9, wobei die Erhebungen (150) in dem Relaisgehäuse (112) oder in der Komponente (122) durch Stanzen und/oder Prägen ausgebildet werden.
